# EUROPEAN PATENT SPECIFICATION

(11) **EP 3 825 089 B1**
(45) Date of publication and mention of the grant of the patent: **07.06.2023**
(21) Application number: 19837294.8
(22) Date of filing: 01.04.2019
(51) Int. Cl.: B29C 43/20, B29C 43/14, B29C 43/00, B29C 43/18, B29B 11/12, B29C 43/36, B29C 43/52, B29C 67/04, F16J 3/02, B29K 27/12, B29K 27/18, B29K 105/00, B29L 31/00

(54) **MOLDING METHOD FOR FLUORORESIN MOLDED ARTICLE, PRODUCTION METHOD FOR MEDICAL DIAPHRAGM, AND PRODUCTION METHOD FOR DIAPHRAGM FOR SEMICONDUCTOR**
VERFAHREN ZUM FORMEN EINES FLUORHARZGEFORMTEN ARTIKELS, VERFAHREN ZUR HERSTELLUNG EINES MEDIZINISCHEN DIAPHRAGMAS UND VERFAHREN ZUR HERSTELLUNG EINES DIAPHRAGMAS FÜR HALBLEITER
MÉTHODE DE MOULAGE D'UN ARTICLE MOULÉ EN RÉSINE FLUORÉE, MÉTHODE DE PRODUCTION D'UN DIAPHRAGME MÉDICAL ET MÉTHODE DE PRODUCTION D'UN DIAPHRAGME POUR SEMI-CONDUCTEUR

(30) Priority: 20.07.2018 JP 2018136881
(43) Date of publication of application: 26.05.2021
(73) Proprietor: Taiyo Packing Co.,Ltd., Mine-shi, Yamaguchi, 759-2211 (JP)
(72) Inventor: HIGUCHI, Junichi, Yamaguchi 759-2211 (JP)
(74) Representative: Cabinet Beau de Loménie
(86) International application number: PCT/JP2019/014515
(87) International publication number: WO 2020/017106

(56) References cited:
- EP-A1- 1 449 866
- WO-A1-2008/069196
- WO-A1-2008/069196
- JP-A- H0 510 444
- JP-A- H0 510 444
- JP-A- 2003 311 763
- JP-A- 2003 311 763
- JP-A- 2007 320 267
- JP-A- 2007 320 267
- US-A1- 2003 034 582

## Description

### TECHNICAL FIELD

The present invention relates to a molding method for a fluororesin molded article that includes pressing a fluororesin powder, using a primary mold to form a preliminary molded article, sintering the preliminary molded article, and loading the sintered preliminary molded article into a secondary mold and cooling the sintered preliminary molded article while pressing the sintered preliminary molded article, to form a fluororesin molded article. The present invention also relates to a production method for a medical diaphragm for use in production of a serum or vaccine using the molding method for a fluororesin molded article, and a production method for a diaphragm for semiconductor for use in cleaning of semiconductor products.

### BACKGROUND ART

Fluororesins, such as polytetrafluoroethylene (hereinafter referred to as "PTFE"), have excellent heat resistance, chemical resistance, etc., and therefore, are suitably used as a material for diaphragms, bellows, etc.

As a molding method for fluororesin molded articles, compression molding is conventionally known. Compression molding is suitable as a method for forming a precise molded article. For example, in the case where a diaphragm requiring high dimensional precision is formed by molding, hot coining is used, which is a type of compression molding. In hot coining, a fluororesin powder is compressed using a primary mold to form a preliminary molded article, the preliminary molded article is sintered, and the sintered preliminary molded article is cooled in a secondary mold while being compressed, whereby the sintered preliminary molded article is formed into a desired shape.

As an example production method for a diaphragm using hot coining, there is a technique of initially pressing a fluororesin to form a preliminary molded article, then sintering the preliminary molded article to produce a sintered article, further heating the sintered article to produce a heated article, and finally rapidly cooling the heated article while pressing the heated article at a high temperature, to obtain a final product (see, for example, Patent Document 1). Patent Document 1 indicates that such a diaphragm production method can be used to produce a diaphragm in which crystallization of a fluororesin is inhibited, and a crack does not occur due to repetitive deformation in use.

### CITATION LIST

### PATENT LITERATURE

Patent Document 1: Japanese Unexamined Patent Application Publication No. H05-10444

### SUMMARY OF INVENTION

### TECHNICAL PROBLEM

Incidentally, some diaphragm product has a membrane section which is subjected to repetitive deformation in use, and in addition, a valve section which is a non-deformation part, and the like, and thus the sections have respective functions different from each other. In such a diaphragm, for example, the membrane section is required to have bending resistance, and the valve section is required to have wear resistance, and the like, i.e. the sections require respective specifications different from each other. In order to meet such required specifications, product design depending on specifications required for each section is needed, such as changing the degree of crystallinity of a resin for each section.

However, in the production method described in Patent Document 1, it is not assumed that the degree of crystallinity is changed for each section of the diaphragm. In conventional techniques including that described in Patent Document 1, sections such as the repetitive-deformation section and the non-deformation section are formed as separate fluororesin molded articles, which are joined together after molding, to produce a diaphragm including sections having respective characteristics different from each other. However, in a diaphragm produced by such a production method, the joint portion is likely to have insufficient strength. In addition, the sections require respective quality managements different from each other, disadvantageously leading to an increase in manufacturing cost.

With the above problems in mind, the present invention has been made. It is an object of the present invention to provide a molding method for a fluororesin molded article that is capable of forming a fluororesin molded article including sections having respective characteristics different from each other, as an integrally molded product. It is another object of the present invention to provide a production method for a medical diaphragm for use in production of a serum or vaccine, using the molding method for a fluororesin molded article, and a production method for a diaphragm for semiconductor that is used to clean a semiconductor product, using the molding method for a fluororesin molded article.

### SOLUTION TO PROBLEM

A characteristic feature of a molding method for a fluororesin molded article according to the present invention for achieving the above object is a molding method for a fluororesin molded article, the method comprising forming a preliminary molded article by pressing a fluororesin powder in a primary mold, sintering the preliminary molded article, loading the sintered preliminary molded article into a secondary mold, cooling the preliminary molded article while pressing the preliminary molded article, to form the fluororesin molded article, wherein the forming a preliminary molded article includes loading, into the primary mold, a layered product in which at least two kinds of fluororesin powders having respective average particle sizes different from each other are layered.

In the molding method for a fluororesin molded article having this feature, the forming a preliminary molded article includes loading, into the primary mold, a layered product in which at least two kinds of fluororesin powders having respective average particle sizes different from each other are layered. Therefore, in the resultant fluororesin molded article, the sections derived from the fluororesin powders having respective average particle sizes different from each other can have respective characteristics such as the degree of crystallinity that are different from each other. As a result, a fluororesin molded article including sections having respective characteristics different from each other can be formed as an integrally molded product.

In the molding method for a fluororesin molded article according to the present invention, the layered product preferably has a first and a second layer, the first layer being formed of a first one of the at least two kinds of fluororesin powders and the second layer being formed of a second one of the at least two kinds of fluororesin powders, and the first and second kinds of fluororesin powders having respective average particle sizes different from each other, and the two kinds of fluororesins are preferably selected such that in the fluororesin molded article after molding, a first section corresponding to the first layer and a second section corresponding to the second layer have respective functions different from each other.

According to the molding method for a fluororesin molded article having this feature, the first and second layers of the layered product are formed of two kinds of a fluororesin having respective average particle sizes different from each other, i.e. the first layer is formed of a first one of the at least two kinds of fluororesin powders and the second layer is formed of a second one of the at least two kinds of fluororesin powders, and the first and second kinds of fluororesin powders have respective average particle sizes different from each other, and the two kinds of fluororesins are selected such that in the fluororesin molded article after molding, a first section corresponding to the first layer and a second section corresponding to the second layer have respective functions different from each other. Therefore, the first and second sections requiring respective specifications different from each other can be integrally formed.

In the molding method for a fluororesin molded article according to the present invention, the first section is preferably a non-deformation section formed from a fluororesin powder having an average particle size of 300 um or more, and the second section is preferably a repetitive-deformation section formed from a fluororesin powder having an average particle size of 100 um or less.

According to the molding method for a fluororesin molded article having this feature, the first section is formed from a fluororesin powder having an average particle size of 300 um or more, and therefore, has excellent wear resistance characteristics required for a non-deformation section, and the second section is formed of a fluororesin powder having an average particle size of 100 um or less, and therefore, has excellent bending resistance characteristics required for a repetitive-deformation section that is repetitively deformed in use.

In the molding method for a fluororesin molded article according to the present invention, the fluororesin is preferably polytetrafluoroethylene.

According to the molding method for a fluororesin molded article having this feature, a molded article of polytetrafluoroethylene, which has excellent heat resistance, chemical resistance, etc., can be obtained.

In the molding method for a fluororesin molded article according to the present invention, the volume of a cavity formed inside the secondary mold is preferably set to be 0.80-0.95 times as great as the volume of a cavity formed in the primary mold.

According to the molding method for a fluororesin molded article having this feature, the preliminary molded article is formed using the primary mold, and thereafter, the fluororesin molded article is formed using the secondary mold, whose cavity has a slightly smaller volume than that of the cavity of the primary mold, whereby the fluororesin molded article can be precisely formed only by compression molding. Therefore, it is not necessary to perform cutting or the like using a milling machine or the like after molding, and therefore, the yield can be improved.

In the molding method for a fluororesin molded article according to the present invention, the repetitive-deformation section is preferably formed as a membrane section of a diaphragm, the membrane section having a curved cross-sectional shape, the non-deformation section is preferably formed as a column-shaped linking section extending from the membrane section on a convex surface of the curved shape, and a valve section integrally provided at an end of the linking section and having a shape wider than the linking section in a direction perpendicular to an extension direction of the linking section, and a metal member having a first and a second end portion, the first end portion being wider than the second end portion, is preferably embedded by insert molding with the first end portion disposed inside the valve section, and the second end portion exposed from the membrane section on a concave surface of the curved shape.

According to the molding method for a fluororesin molded article having this feature, the repetitive-deformation section is formed as a membrane section of a diaphragm, the membrane section having a curved cross-sectional shape, the non-deformation section is formed as a column-shaped linking section extending from the membrane section on a convex surface of the curved shape, and a valve section integrally provided at an end of the linking section and having a shape wider than the linking section, and a metal member having a first and a second end portion, the first end portion being wider than the second end portion, is embedded by insert molding with the wider end portion disposed inside the valve section, and the second end portion exposed from the membrane section on a concave surface of the curved shape. Therefore, in the fluororesin molded article after molding, even when the metal member is pulled toward the concave surface of the membrane section, the metal member can be reliably prevented from dropping from the fluororesin molded article. Therefore, a fluororesin molded article can be formed that has excellent durability when the diaphragm is repetitively driven with the metal member attached to a drive device.

In the molding method for a fluororesin molded article according to the present invention, the preliminary molded article is preferably formed with the metal member wrapped in a fluororesin powder.

According to the molding method for a fluororesin molded article having this feature, the preliminary molded article is formed with the metal member wrapped in a fluororesin powder. Therefore, adhesion between the fluororesin molded article and the metal member after molding can be enhanced. Therefore, a metal member of stainless steel can be used that is less compatible with fluororesin materials, and is therefore difficult to incorporate into a fluororesin molded article by insert-molding using conventional techniques.

A characteristic feature of a production method for a medical diaphragm according to the present invention for achieving the object is a production method for a medical diaphragm for use in production of a serum or vaccine, the method using the molding method for a fluororesin molded article having any one of the above features.

In conventional techniques, a plurality of parts are formed as separate fluororesin molded articles, which are joined together after molding to produce a diaphragm, and therefore, the joint portion is likely to be contaminated. If such a diaphragm is used in production of a serum or vaccine, the resultant serum or vaccine is likely to be mixed with bacteria, etc. In the molding method for a medical diaphragm having this feature, a medical diaphragm including sections having respective characteristics different from each other can be formed as an integrally molded product, and therefore, a medical diaphragm can be produced in which a serum or vaccine is not mixed with bacteria, etc., due to the joint portion contamination. In addition, in a medical diaphragm produced using the production method for a medical diaphragm having this feature, the fluororesin provides an inactive interface, and therefore, mixing with bacteria, etc., from the surface of the medical diaphragm is inhibited, and therefore, a highly-safe serum or vaccine can be produced.

A characteristic feature of a production method for a medical diaphragm according to the present invention for achieving the object is a production method for a medical diaphragm for use in production of a serum or vaccine, the method using the molding method for a fluororesin molded article having any one of the above features, wherein the non-deformation section is formed as a valve section of the diaphragm, and the repetitive-deformation section is formed as a membrane section of the diaphragm.

According to the production method for a medical diaphragm having this feature, a medical diaphragm in which the membrane section and the valve section have respective characteristics different from each other can be formed as an integrally molded product, and therefore, a medical diaphragm can be produced in which a serum or vaccine is not mixed with bacteria, etc., due to the joint portion contamination. In addition, in a medical diaphragm produced using the production method for a medical diaphragm having this feature, the fluororesin provides an inactive interface, and therefore, mixing with bacteria, etc., from the surface of the medical diaphragm is inhibited, and therefore, a highly-safe serum or vaccine can be produced.

A characteristic feature of a production method for a diaphragm for semiconductor according to the present invention for achieving the object is a production method for a diaphragm for semiconductor for cleaning of a semiconductor product, the method using the molding method for a fluororesin molded article of any one of the above features.

In conventional techniques, a plurality of parts are formed as separate fluororesin molded articles, which are joined together after molding to produce a diaphragm, and therefore, the joint portion is likely to be contaminated. If such a diaphragm is used in cleaning of a semiconductor product, the resultant diaphragm is likely to be mixed with impurities, contamination, etc. In the molding method for a diaphragm for semiconductor having this feature, a diaphragm for semiconductor including sections having respective characteristics different from each other can be formed as an integrally molded product, and therefore, a diaphragm for semiconductor can be produced that is not mixed with impurities, contamination, etc., due to the joint portion contamination. In addition, in a diaphragm for semiconductor produced using the production method for a diaphragm for semiconductor having this feature, the fluororesin provides an inactive interface, and therefore, mixing with impurities, contamination, etc., from the surface of the diaphragm for semiconductor is inhibited, and therefore, a semiconductor product can be highly cleaned.

A characteristic feature of a production method for a diaphragm for semiconductor according to the present invention for achieving the object is a production method for a diaphragm for semiconductor for cleaning of a semiconductor product, the method using the molding method for a fluororesin molded article of any one of the above features, wherein the non-deformation section is formed as a valve section of the diaphragm, and the repetitive-deformation section is formed as a membrane section of the diaphragm.

According to the production method for a diaphragm for semiconductor having this feature, a diaphragm for semiconductor in which the membrane section and the valve section have respective characteristics different from each other can be formed as an integrally molded product, and therefore, a diaphragm for semiconductor can be produced that is not mixed with impurities, contamination, etc., due to the joint portion contamination. In addition, in a diaphragm for semiconductor produced using the production method for a diaphragm for semiconductor having this feature, the fluororesin provides an inactive interface, and therefore, mixing with impurities, contamination, etc., from the surface of the diaphragm for semiconductor is inhibited, and therefore, a semiconductor product can be highly cleaned.

### BRIEF DESCRIPTION OF DRAWINGS

[FIG. 1] FIG. 1 is a diagram for describing a molding method for a fluororesin molded article, FIG. 1(a) is a cross-sectional view of a primary mold, and FIG. 1(b) is a cross-sectional view of the primary mold filled with a layered product.
[FIG. 2] FIG. 2 is a cross-sectional view of a preliminary molded article.
[FIG. 3] FIG. 3 is a diagram for describing a molding method for a fluororesin molded article, FIG. 3(a) is a cross-sectional view of a secondary mold, and FIG. 3(b) is a cross-sectional view of the secondary mold with a sintered article attached thereto.
[FIG. 4] FIG. 4 is a cross-sectional view of a diaphragm.

### DESCRIPTION OF EMBODIMENTS

A fluororesin molded article developed by the present inventor is an integrally molded product of a fluororesin that is formed from at least two kinds of fluororesin powders which have respective average particle sizes different from each other, as a starting material, and that includes sections having respective characteristics different from each other, and that is obtained by performing the following steps A-D. Specifically, the molding method for a fluororesin molded article according to the present invention includes step A of preparing a layered product by layering at least two kinds of fluororesin powders having respective average particle sizes different from each other, step B of loading the layered product into a primary mold, and pressing the layered product to form a preliminary molded article, step C of sintering the preliminary molded article to obtain a sintered article, and step D of loading the sintered article into a secondary mold, and cooling the sintered article while pressing the sintered article. In the description that follows, as an embodiment pertaining to the molding method for a fluororesin molded article according to the present invention, a production method for a diaphragm in which a plurality of sections having respective characteristics different from each other are integrally formed. Note that the present invention is not intended to be limited to embodiments and drawings described below.

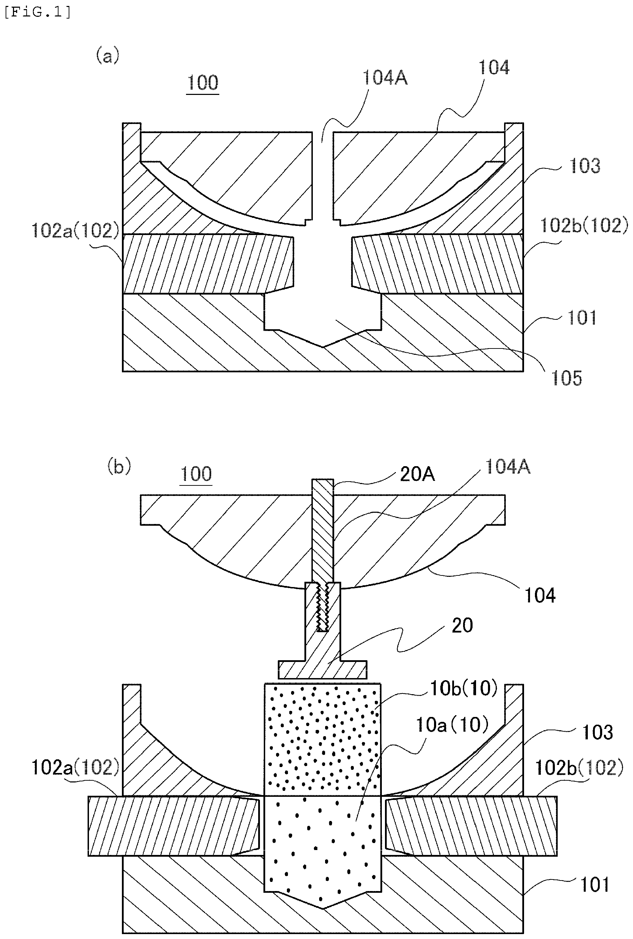

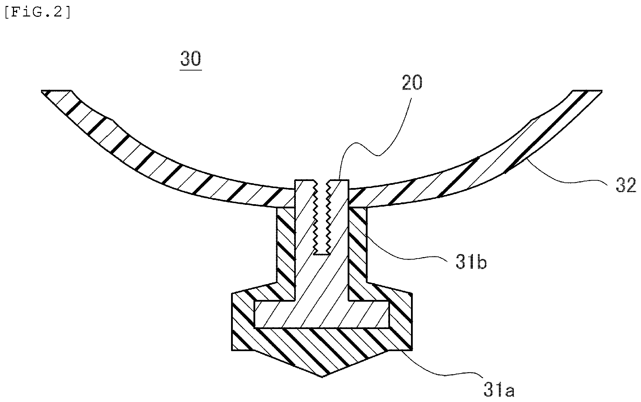

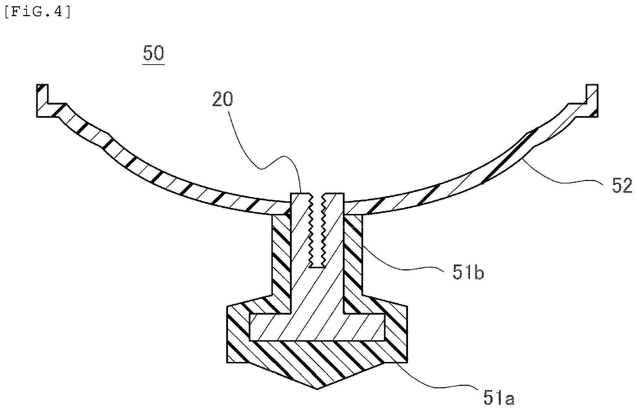

FIG. 1 is a diagram for describing a molding method for a fluororesin molded article, and describing step A and step B. FIG. 1(a) is a cross-sectional view of a primary mold 100, and FIG. 1(b) is a cross-sectional view of the primary mold 100 filled with a layered product 10. The primary mold 100 includes molds 101, 102, and 103 as a lower mold, and a mold 104 as an upper mold. As shown in FIG. 1(a), a cavity 105 is formed inside the primary mold 100 with both the upper and lower molds attached together. The cavity 105 has the shape of a preliminary molded article (shown in FIG. 2 described below) that has a greater wall thickness than that of a diaphragm as a final product (shown in FIG. 4 described below). In this embodiment, the mold 102 includes separate molds 102a and 102b. Before pressing, as shown in FIG. 1(b), the lower mold is assembled with the molds 102a and 102b spaced apart from each other. The mold 104 as the upper mold has a through hole 104A into which a jig 20A shown in FIG. 1(b) is to be inserted.

In step A, a fluororesin powder having an average particle size of 300 um or more is deposited in the lower mold of the primary mold 100 including the molds 101, 102, and 103, to form a first layer 10a. A fluororesin powder having an average particle size of 100 um or less is deposited on the first layer 10a to form a second layer 10b. Thus, the layered product 10 including a stack of the first layer 10a and the second layer 10b is formed. Here, the average particle size of a fluororesin powder is defined as the average value of effective diameters measured by laser diffractometry in a dry fashion. The average particle size of a fluororesin powder can be measured using, for example, a particle size distribution measurement device. The wear resistance of a fluororesin molded article increases with an increase in the average particle size of a fluororesin powder as the starting material. The bending resistance of a fluororesin molded article increases with a decrease in the average particle size of a fluororesin powder as the starting material. Therefore, in the layered product 10, a layer that is to serve as a non-deformation section which is brought into contact with another member without being deformed in use after molding, such as the valve section of a diaphragm, is preferably formed of a fluororesin powder having a greater average particle size, and a layer that is to serve as a repetitive-deformation section which is repetitively deformed in use after molding, such as the membrane section of a diaphragm, is preferably formed of a fluororesin powder having a smaller average particle size. For example, two kinds of fluororesin powders powder are successively deposited in the lower mold while the powders are sieved over the lower mold of the primary mold 100. As a result, as shown in FIG. 1(b), the layered product 10 including the first layer 10a and the second layer 10b can be formed. In this embodiment, the fluororesin powders are directly deposited in the lower mold of the primary mold 100 so that the layered product 10 is formed, and at the same time, the layered product 10 is loaded into the primary mold 100. Alternatively, the two-layer layered product 10 may be previously formed before being loaded into the primary mold 100, and the completed layered product 10 may be put into the lower mold of the primary mold 100. In addition, although in this embodiment, the layered product 10 includes the two layers, i.e. the first layer 10a and the second layer 10b, the layered product 10 may include three or more layers. In the case where the layered product 10 includes three or more layers, not all of the layers have respective average particle sizes different from each other of fluororesin powders. For example, a layered product having a three-layer structure may be provided in which the first and third layers may be formed of a fluororesin powder having the same average particle size of 300 um or more, and the second layer may be formed of a fluororesin powder having an average particle size of 100 um or less.

Examples of the fluororesin powder include powders of polytetrafluoroethylene (hereinafter referred to as "PTFE"), tetrafluoroethylene-hexafluoropropylene copolymer, tetrafluoroethylene-perfluoroalkylvinyl ether copolymer, polychlorotrifluoroethylene, polyvinylidene fluoride, polyvinyl fluoride, ethylene-tetrafluoroethylene copolymer, and ethylene-chlorotrifluoroethylene copolymer. A powder of PTFE is particularly preferable.

In step B, a metal member 20 that is an insert for the diaphragm of FIG. 1(b) is set in the mold 104 as an upper mold with the metal member 20 attached to the jig 20A. Next, the mold 104 is driven downward, and at the same time, the molds 102a and 102b are driven inward, to press the layered product 10. The pressure applied to the layered product 10 in step B is preferably set to 50-150 kgf/cm². The layered product 10 is preferably pressed at room temperature. When the layered product 10 is pressed, fine voids in the fluororesin powder are filled, so that the apparent volume of the layered product 10 is reduced by a factor of 2-4 (i.e., the volume becomes 1/2 to 1/4 of the original volume). Thus, the layered product 10 is formed into a preliminary molded article having the shape of the cavity 105.

FIG. 2 is a cross-sectional view of a preliminary molded article 30. The preliminary molded article 30 has first preliminary molded portions 31a and 31b that have been formed by pressing the first layer 10a of the layered product 10, and a second preliminary molded portion 32 that has been formed by pressing the second layer 10b of the layered product 10. The metal member 20 made of stainless steel (e.g., SUS316L) is provided in the preliminary molded article 30 by insert molding. Stainless steel is less compatible with resin materials, and therefore, it is difficult to apply insert molding to stainless steel using conventional techniques. In the molding method for a fluororesin molded article according to the present invention, preliminary molding is performed with the metal member 20 wrapped in a fluororesin powder, particularly PTFE powder. Therefore, adhesion between the fluororesin and the stainless steel can be enhanced. As a result, the metal member 20 can be inserted into the fluororesin by insert molding.

In step C, the preliminary molded article 30 is removed from the primary mold 100, and is sintered in a heating furnace at a temperature that is higher than or equal to the melting point of the fluororesin powder. In the case where a powder of PTFE (melting point: 327°C) is used as the fluororesin powder, the sintering temperature is preferably set to 360-380°C. When the fluororesin powder is sintered, the internal stress of the preliminary molded article 30 is removed, so that fluororesin powder particles are fused together to form a sintered article.

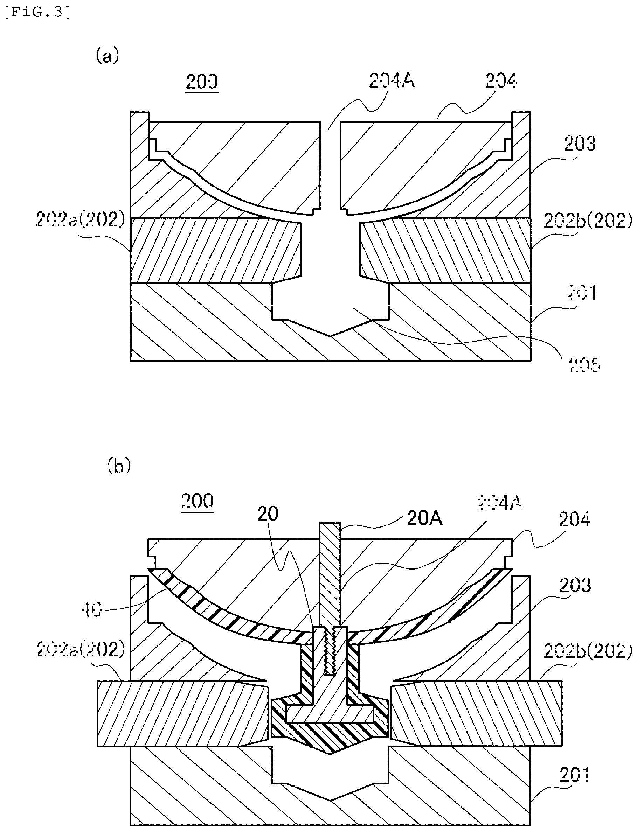

FIG. 3 is a diagram for describing a molding method for a fluororesin molded article, and describing step D. FIG. 3(a) is a cross-sectional view of a secondary mold 200, and FIG. 3(b) is a cross-sectional view of the secondary mold 200 with a sintered article 40 attached thereto. The secondary mold 200 includes molds 201, 202, and 203 as a lower mold, and a mold 204 as an upper mold. As shown in FIG. 3(a), a cavity 205 is formed inside the secondary mold 200 with both the lower and upper molds attached together. The cavity 205 has the shape of a diaphragm as a final product (shown in FIG. 4 described below). In this embodiment, the mold 202 includes separate molds 202a and 202b. Before pressing, as shown in FIG. 3(b), the lower mold is assembled with the molds 202a and 202b spaced apart from each other. The mold 204 as the upper mold has a through hole 204A into which a jig 20A shown in FIG. 3(b) is to be inserted.

In step D, the sintered article 40 is set in the mold 204 as the upper mold with the jig 20A attached to the metal member 20 of FIG. 3(b). Next, the mold 204 is driven downward and at the same time the molds 202a and 202b are driven inward to press the sintered article 40 while the sintered article 40 is heated at a temperature that is higher than or equal to the melting point of the fluororesin powder. The pressure applied to the sintered article 40 in step D is preferably set to 150-250 kgf/cm². In the case where a powder of PTFE (melting point: 327°C) is used as the fluororesin powder, the sintering temperature is preferably set to 360-380°C. When the sintered article 40 is heated while being pressed, the sintered article 40 is plastically deformed, and is formed into the shape of the cavity 205. Thereafter, the sintered article 40 is cooled with the secondary mold 200 maintained in the pressurized state, and thereafter, the pressure applied to the secondary mold 200 is removed. A cooling temperature in step D is preferably set to 110-130°C. When the fluororesin is cooled to 110-130°C, the fluororesin is less likely to be deformed. After the end of cooling, the secondary mold 200 is disassembled. As a result, a diaphragm formed in the shape of the cavity 205 is obtained.

The volume of the cavity 205 formed in the secondary mold 200 is preferably set to be 0.80-0.95 times as great as the volume of the cavity 105 formed in the primary mold 100. The preliminary molded article 30, which is the prototype of a diaphragm, is formed by pressing using the primary mold 100, and thereafter, is pressed using the secondary mold 200, whose cavity has a slightly smaller volume than that of the cavity of the primary mold 100, whereby the diaphragm can be precisely formed only by compression molding. Therefore, it is not necessary to perform cutting or the like using a milling machine or the like after molding, and therefore, the yield can be improved.

FIG. 4 is a cross-sectional view of a diaphragm 50. The diaphragm 50 has a valve section 51a, a linking section 51b, and a membrane section 52, which together form an integrally molded product, and a metal member 20 which is an insert. The valve section 51a and the linking section 51b are a non-deformation section that is not deformed in use. The membrane section 52 is a repetitive-deformation section that is repetitively deformed in use. The non-deformation section and the repetitive-deformation section are both formed from a fluororesin, and have respective degrees of resin crystallinity different from each other. As used herein, the degree of crystallinity refers to the proportion of a portion (crystalline portion) of a resin (polymer) in which molecular chains are arranged in a regular pattern to the entire polymer (the crystalline portion + the amorphous portion). A fluororesin that is a crystalline polymer may have a degree of crystallinity in the range of 30-70%. The valve section 51a and the linking section 51b, which are a sintered body of the fluororesin powder having an average particle size of 300 um or more derived from the first layer 10a of the layered product 10, have a degree of crystallinity of 50-70% and therefore have excellent wear resistance characteristics. The membrane section 52, which is a sintered body of the fluororesin powder having an average particle size of 100 um or less derived from the second layer 10b of the layered product 10, has a degree of crystallinity of not less than 300 and less than 50% and therefore has excellent bending resistance characteristics. The degree of crystallinity of each section of the diaphragm 50 can be measured using, for example, wide-angle X-ray diffractometry. In FIG. 4, the membrane section 52 is formed so as to have a curved cross-section. The linking section 51b is formed in the shape of a column extending from the convex surface of the membrane section 52. The valve section 51a is integrally provided at an end of the linking section 51b, and has a shape wider than the linking section 51b in a direction perpendicular to the extension direction of the linking section 51b. In addition, the metal member 20, which is embedded in the diaphragm 50 by insert molding, is shaped such that one end portion thereof is wider than the other end portion, the wider end portion is provided inside the valve section 51a, and the other end portion is exposed from the concave surface of the membrane section 52.

The degree of crystallinity of the fluororesin can be controlled based on the cooling rate in step D. In addition, the degree of crystallinity of the fluororesin correlates with the friction coefficient of the fluororesin, i.e. as the degree of crystallinity decreases, the friction coefficient increases. For example, by increasing the cooling rate in step D, the degree of crystallinity of the fluororesin is reduced, so that the friction coefficient of the surface of the diaphragm 50 can be increased. Conversely, by reducing the cooling rate in step D, the degree of crystallinity of the fluororesin is increased, so that the friction coefficient of the surface of the diaphragm 50 can be reduced.

As described above, in the molding method for a fluororesin molded article according to the present invention, the layered product 10 in which fluororesin powders having respective average particle sizes different from each other are layered is formed, and the layered product 10 is pressed using the primary mold 100 and the secondary mold 200 successively to form a fluororesin molded article. Therefore, in the resultant fluororesin molded article, each section derived from a fluororesin powder having a different average particle size, has respective characteristics different from each other such as the degree of crystallinity. Thus, by performing the molding method for a fluororesin molded article according to the present invention, a fluororesin molded article including sections having respective characteristics different from each other can be formed as an integrally molded product.

In addition, the molding method for a fluororesin molded article according to the present invention can be used for formation (production) of a medical diaphragm for use in production of a serum or vaccine. In such a medical diaphragm, sections thereof such as a membrane section and a valve section need to have respective characteristics different from each other, depending on the functions thereof. However, in conventional techniques, a membrane section, a valve section, etc., that have respective characteristics different from each other are formed as separate fluororesin molded articles, which are joined together after molding to produce a diaphragm, and therefore, the joint portion is likely to be contaminated during production. If such a diaphragm is used in production of a serum or vaccine, the resultant serum or vaccine is likely to be mixed with bacteria, etc., from the contaminated joint portion. In the molding method for a fluororesin molded article according to the present invention, a membrane section having excellent bending resistance and a valve section having excellent wear resistance can be formed as an integrally molded product, and therefore, sections such as a membrane section and a valve section have respective characteristics different from each other, depending on the functions thereof. Thus, a medical diaphragm can be produced in which a serum or vaccine is unlikely to be mixed with bacteria, etc., due to the joint portion contamination that is a problem with conventional techniques. In addition, the fluororesin molded article has an inactive interface, and therefore, if a serum or vaccine is produced using a medical diaphragm formed by the molding method for a fluororesin molded article according to the present invention, mixing with bacteria, etc., from the surface of the medical diaphragm is inhibited, and therefore, a highly-safe serum or vaccine can be produced.

Furthermore, the molding method for a fluororesin molded article according to the present invention can be used for formation (production) of a diaphragm for semiconductor that is used for cleaning of semiconductor products. In the production method for a diaphragm for semiconductor according to the present invention, a diaphragm for semiconductor in which sections thereof have respective characteristics different from each other can be formed as an integrally molded product, and therefore, the produced diaphragm for semiconductor is free from mixing with impurities, contamination, etc., due to contamination of the joint portion. In addition, in a diaphragm for semiconductor produced using the production method for a diaphragm for semiconductor according to the present invention, the fluororesin provides an inactive interface, and therefore, mixing with impurities, contamination, etc., from the surface of the diaphragm for semiconductor is inhibited, so that the semiconductor product can be highly cleaned.

### [Example]

Next, the molding method for a fluororesin molded article according to the present invention will further be described on the basis of a specific example.

In step A, in the iron primary mold 100 of FIG. 1(a), a powder of PTFE having an average particle size of 20 um was deposited in the lower mold assembled by attaching the molds 101, 102, and 103 together to form the first layer 10a, and PTFE having an average particle size of 480 um was deposited on the first layer 10a to form the second layer 10b, so that the layered product 10 including two layers, i.e. the first layer 10a and the second layer 10b, was formed. In step B, as shown in FIG. 1(b), the metal member 20 with the jig 20A attached thereto was set in the mold 104, and the deposited body 10 was pressed with a pressure of 100 kgf/cm² at room temperature by driving the mold 104 downward and driving the molds 102a and 102b inward with the layered product 10 loaded in the lower mold, to obtain the preliminary molded article 30. In step C, the preliminary molded article 30 was removed from the primary mold 100, and was sintered in a heating furnace at 373°C, to obtain the sintered article 40. In step D, as shown in FIG. 3(b), the sintered article 40 in which the jig 20A was attached to the metal member 20 was set in the mold 204, and the sintered article 40 was heated to 373°C while being pressed with a pressure of 200 kgf/cm² by driving the mold 204 downward and driving the molds 202a and 202b inward, and thereafter, was cooled to 120°C. After cooling, the secondary mold 200 was disassembled. Thus, the diaphragm 50 of the example was obtained.

The degree of crystallinity of the diaphragm 50 of the example was measured using wide-angle X-ray diffractometry at the valve section 51a, the linking section 51b, and the membrane section 52. The valve section 51a and the linking section 51b had a degree of crystallinity of 300, i.e. high wear resistance. Such characteristics at the valve section 51a and the linking section 51b met specifications required for the non-deformation section. In addition, the membrane section 52 had a degree of crystallinity of 70%, i.e. excellent bending resistance. Such characteristics at the membrane section 52 met specifications required for the repetitive-deformation section.

### INDUSTRIAL APPLICABILITY

The molding method for a fluororesin molded article according to the present invention is preferably applicable, particularly, to production of a diaphragm for medical use or semiconductor, and is also applicable to production of diagrams for other applications, such as industry, agriculture, research, and food.

### REFERENCE SIGNS LIST

- 10: LAYERED PRODUCT
- 10a: FIRST LAYER
- 10b: SECOND LAYER
- 30: PRELIMINARY MOLDED ARTICLE
- 50: DIAPHRAGM (FLUORORESIN MOLDED ARTICLE)
- 51a: VALVE SECTION (FIRST SECTON)
- 51b: LINKING SECTION (FIRST SECTION)
- 52: MEMBRANE SECTION (SECOND SECTION)
- 100: PRIMARY MOLD
- 105: CAVITY
- 200: SECONDARY MOLD
- 205: CAVITY

## Claims

1. A molding method for a fluororesin molded article (50), the method being **characterized in that** it comprises forming a preliminary molded article (30) by pressing a fluororesin powder in a primary mold (100), sintering the preliminary molded article, loading the sintered preliminary molded article into a secondary mold (200), cooling the preliminary molded article while pressing the preliminary molded article, to form the fluororesin molded article,
and **in that** the forming of a preliminary molded article includes loading, into the primary mold, a layered product (10) in which at least two kinds of fluororesin powders having respective average particle sizes different from each other are layered.

2. The molding method of claim 1, wherein
the layered product has a first layer (10a) and a second layer (10b), the first layer being formed of a first one of the at least two kinds of fluororesin powders and the second layer being formed of a second one of the at least two kinds of fluororesin powders, and the first and second kinds of fluororesin powders having respective average particle sizes different from each other, and
the two kinds of fluororesins are selected such that in the fluororesin molded article after molding, a first section (51a, 51b) corresponding to the first layer and a second section (52) corresponding to the second layer have respective functions different from each other.

3. The molding method of claim 2, wherein
the first section (51a, 51b) is a non-deformation section formed from a fluororesin powder having an average particle size of 300 um or more, and
the second section (52) is a repetitive-deformation section formed from a fluororesin powder having an average particle size of 100 um or less.

4. The molding method of any one of claims 1-3, wherein
the fluororesin is polytetrafluoroethylene.

5. The molding method of any one of claims 1-4, wherein
the volume of a cavity (205) formed inside the secondary mold (200) is set to be 0.80-0.95 times as great as the volume of a cavity (105) formed in the primary mold (100).

6. The molding method of any one of claims 3-5, wherein
the repetitive-deformation section is formed as a membrane section (52) of a diaphragm (50), the membrane section having a curved cross-sectional shape,
the non-deformation section is formed as a column-shaped linking section (51b) extending from the membrane section on a convex surface of the curved shape, and a valve section (51a) integrally provided at an end of the linking section and having a shape wider than the linking section in a direction perpendicular to an extension direction of the linking section, and
a metal member (20) having a first and a second end portion, the first end portion being wider than the second end portion, is embedded by insert molding with the first end portion disposed inside the valve section, and the second end portion exposed from the membrane section on a concave surface of the curved shape.

7. The molding method of claim 6, wherein
the preliminary molded article (30) is formed with the metal member (20) wrapped in a fluororesin powder.

8. A production method for a medical diaphragm (50) for use in production of a serum or vaccine, the method using the molding method of any one of claims 1-7.

9. A production method for a medical diaphragm (50) for use in production of a serum or vaccine, the method using the molding method of any one of claims 3-7, wherein
the non-deformation section is formed as a valve section (51a) of the diaphragm, and
the repetitive-deformation section is formed as a membrane section (52) of the diaphragm.

10. A production method for a diaphragm (50) for semiconductor for cleaning of a semiconductor product, the method using the molding method of any one of claims 1-7.

11. A production method for a diaphragm (50) for semiconductor for cleaning of a semiconductor product, the method using the molding method of any one of claims 3-7, wherein
the non-deformation section is formed as a valve section (51a) of the diaphragm, and
the repetitive-deformation section is formed as a membrane section (52) of the diaphragm.

## Patentansprüche

1. Formverfahren für einen geformten Fluorharzgegenstand (50), wobei das Verfahren **dadurch gekennzeichnet ist, dass** es durch Pressen eines Fluorharzpulvers in eine primäre Form (100), Sintern des vorläufigen geformten Gegenstands, Laden des gesinterten vorläufigen geformten Gegenstands in eine sekundäre Form (200), Abkühlen des vorläufigen geformten Gegenstands, während der vorläufige geformte Gegenstand gepresst wird, um den geformten Fluorharzgegenstand zu bilden, das Bilden eines vorläufigen geformten Gegenstands (30) umfasst,
und dadurch, dass das Bilden eines vorläufigen geformten Gegenstands das Laden in eine primäre Form eines geschichteten Produkts (10) beinhaltet, in dem mindestens zwei Arten von Fluorharzpulvern mit sich voneinander unterscheidenden jeweiligen durchschnittlichen Partikelgrößen geschichtet sind.

2. Formverfahren nach Anspruch 1, wobei
das geschichtete Produkt eine erste Schicht (10a) und eine zweite Schicht (10b) aufweist, wobei die erste Schicht aus einer ersten der mindestens zwei Arten von Fluorharzpulvern gebildet ist und die zweite Schicht aus einer zweiten der mindestens zwei Arten von Fluorharzpulvern gebildet ist, und wobei die erste und die zweite Art von Fluorharzpulvern eine sich voneinander unterscheidende jeweilige Partikelgröße aufweisen, und
die zwei Arten von Fluorharzen derart ausgewählt werden, dass beim geformten Fluorharzgegenstand nach dem Formen ein erster Teilabschnitt (51a, 51b), der der ersten Schicht entspricht, und ein zweiter Teilabschnitt (52), der der zweiten Schicht entspricht, jeweilige Funktionen aufweisen, die sich voneinander unterscheiden.

3. Formverfahren nach Anspruch 2, wobei
der erste Teilabschnitt (51a, 51b) ein verformungsfreier Teilabschnitt ist, der aus einem Fluorharzpulver mit einer durchschnittlichen Partikelgröße von 300 µm oder mehr gebildet ist, und
der zweite Teilabschnitt (52) ein Teilabschnitt mit wiederholter Verformung ist, der aus einem Fluorharzpulver mit einer durchschnittlichen Partikelgröße von 100 µm oder weniger gebildet ist.

4. Formverfahren nach einem der Ansprüche 1 bis 3, wobei das Fluorharz ein Polytetrafluorethylen ist.

5. Formverfahren nach einem der Ansprüche 1 bis 4, wobei
das Volumen eines Hohlraums (205), der in der sekundären Form (200) gebildet ist, derart eingestellt ist, dass er 0,80-0,95 Mal größer ist als das Volumen eines Hohlraums (105), der in der primären Form (100) gebildet ist.

6. Formverfahren nach einem der Ansprüche 3 bis 5, wobei
der Teilabschnitt mit wiederholter Verformung als ein Membranteilabschnitt (52) eines Diaphragmas (50) gebildet ist, wobei der Membranteilabschnitt eine gekrümmte Querschnittsform aufweist,
der verformungsfreie Teilabschnitt als ein säulenförmiger Verbindungsteilabschnitt (51b), der sich vom Membranteilabschnitt auf einer konvexen Fläche der gekrümmten Ausformung erstreckt, und ein Ventilteilabschnitt (51a) gebildet ist, der an einem Ende des Verbindungsteilabschnitts integral bereitgestellt ist und eine Ausformung aufweist, die in einer Richtung senkrecht zu einer Erstreckungsrichtung des Verbindungsteilabschnitts breiter ist als der Verbindungsteilabschnitt, und
ein Metallelement (20) mit einem ersten und einem zweiten Endabschnitt, wobei der erste Endabschnitt breiter ist als der zweite Endabschnitt, durch Einsatzformen in den ersten Endabschnitt eingebettet ist, der im Ventilteilabschnitt angeordnet ist, und der zweite Endabschnitt, der auf einer konkaven Fläche der gekrümmten Ausformung vom Membranteilabschnitt freiliegt.

7. Formverfahren nach Anspruch 6, wobei
der vorläufig geformte Gegenstand (30) gebildet wird, während das Metallelement (20) von einem Fluorharzpulver umgeben ist.

8. Produktionsverfahren für ein medizinisches Diaphragma (50) zur Verwendung bei der Produktion eines Serums oder eines Impfstoffs, wobei das Verfahren das Formverfahren nach einem der Ansprüche 1 bis 7 verwendet.

9. Produktionsverfahren für ein medizinisches Diaphragma (50) zur Verwendung bei der Produktion eines Serums oder eines Impfstoffs, wobei das Verfahren das Formverfahren nach einem der Ansprüche 3 bis 7 verwendet, wobei
der verformungsfreie Teilabschnitt als ein Ventilteilabschnitt (51a) des Diaphragmas gebildet ist, und
der Teilabschnitt mit wiederholter Verformung als ein Membranteilabschnitt (52) des Diaphragmas gebildet ist.

10. Produktionsverfahren für ein Diaphragma (50) für einen Halbleiter zum Reinigen eines Halbleiterprodukts, wobei das Verfahren das Formverfahren nach einem der Ansprüche 1 bis 7 verwendet.

11. Produktionsverfahren für ein Diaphragma (50) für einen Halbleiter zum Reinigen eines Halbleiterprodukts, wobei das Verfahren das Formverfahren nach einem der Ansprüche 3 bis 7 verwendet, wobei
der verformungsfreie Teilabschnitt als ein Ventilteilabschnitt (51a) des Diaphragmas gebildet ist, und
der Teilabschnitt mit wiederholter Verformung als ein Membranteilabschnitt (52) des Diaphragmas gebildet ist.

## Revendications

1. Procédé de moulage d'un article moulé en résine fluorée (50), le procédé étant **caractérisé en ce qu'**il comprend la formation d'un article moulé préliminaire (30) par pressage d'une poudre de résine fluorée dans un moule primaire (100), le frittage de l'article moulé préliminaire, le chargement de l'article moulé préliminaire fritté dans un moule secondaire (200), le refroidissement de l'article moulé préliminaire alors que l'article moulé préliminaire est pressé, pour former l'article moulé en résine fluoré,
et **en ce que** la formation de l'article moulé préliminaire comprend le chargement, dans le moule primaire, d'un produit stratifié (10) dans lequel au moins deux types de poudres de résine fluorée ayant des granulométries moyennes respectives différentes sont stratifiés.

2. Procédé de moulage selon la revendication 1, dans lequel
le produit stratifié a une première couche (10a) et une deuxième couche (10b), la première couche étant formée d'un premier type parmi les au moins deux types de poudres de résine fluorée et la deuxième couche étant formée d'un deuxième type parmi les au moins deux types de poudres de résine fluorée, et les premier et deuxième types de poudres de résine fluorée ayant des granulométries moyennes respectives différentes, et
les deux types de résines fluorées sont choisis de façon que, dans l'article moulé en résine fluorée après moulage, une première section (51a, 51b) correspondant à la première couche et une deuxième section (52) correspondant à la deuxième couche aient des fonctions respectives différentes.

3. Procédé de moulage selon la revendication 2, dans lequel
la première section (51a, 51b) est une section de non-déformation formée à partir d'une poudre de résine fluorée ayant une granulométrie moyenne de 300 µm ou plus, et
la deuxième section (52) est une section de déformation répétitive formée à partir d'une poudre de résine fluorée ayant une granulométrie moyenne de 100 µm ou moins.

4. Procédé de moulage selon l'une quelconque des revendications 1 à 3, dans lequel
la résine fluorée est le polytétrafluoroéthylène.

5. Procédé de moulage selon l'une quelconque des revendications 1 à 4, dans lequel
le volume d'une cavité (205) formée à l'intérieur du moule secondaire (200) est établi de façon à être de 0,80 à 0,95 fois le volume d'une cavité (105) formée dans le moule primaire (100).

6. Procédé de moulage selon l'une quelconque des revendications 3 à 5, dans lequel
la section de déformation répétitive est formée comme une section de membrane (52) d'un diaphragme (50), la section de membrane ayant une forme en coupe transversale courbée,
la section de non-déformation est formée comme une section de liaison en forme de colonne (51b) s'étendant à partir de la section de membrane sur une surface convexe de la forme courbée, et une section de vanne (51a) disposée solidairement à une extrémité de la section de liaison et ayant une forme plus large que la section de liaison dans une direction perpendiculaire à la direction d'extension de la section de liaison, et
un élément métallique (20) ayant des première et deuxième portions d'extrémité, la première portion d'extrémité étant plus large que la deuxième portion d'extrémité, est intégré par moulage par insertion avec la première portion d'extrémité disposée à l'intérieur de la section de vanne, et la deuxième portion d'extrémité exposée à partir de la section de membrane sur une surface concave de la forme courbée.

7. Procédé de moulage selon la revendication 6, dans lequel l'article moulé préliminaire (30) est formé avec l'élément métallique (20) enveloppé dans une poudre de résine fluorée.

8. Procédé de production d'un diaphragme médical (50) pour une utilisation dans la production d'un sérum ou d'un vaccin, le procédé utilisant le procédé de moulage de l'une quelconque des revendications 1 à 7.

9. Procédé de production d'un diaphragme médical (50) pour une utilisation dans la production d'un sérum ou d'un vaccin, le procédé utilisant le procédé de moulage de l'une quelconque des revendications 3 à 7, dans lequel
la section de non-déformation est formée comme une section de vanne (51a) du diaphragme, et
la section de déformation répétitive est formée comme une section de membrane (52) du diaphragme.

10. Procédé de production d'un diaphragme (50) pour semi-conducteur pour le nettoyage d'un produit semi-conducteur, le procédé utilisant le procédé de moulage de l'une quelconque des revendications 1 à 7.

11. Procédé de production d'un diaphragme (50) pour semi-conducteur pour le nettoyage d'un produit semi-conducteur, le procédé utilisant le procédé de moulage de l'une quelconque des revendications 3 à 7, dans lequel
la section de non-déformation est formée comme une section de vanne (51a) du diaphragme, et
la section de déformation répétitive est formée comme une section de membrane (52) du diaphragme.
